# EUROPÄISCHE PATENTSCHRIFT

(11) **EP 0 686 057 B1**
(45) Veröffentlichungstag und Bekanntmachung des Hinweises auf die Patenterteilung: **15.03.2000**
(21) Anmeldenummer: 95903243.4
(22) Anmeldetag: 19.12.1994
(51) Int. Cl.: B01D 24/00, B01D 24/38

(54) **FLÜSSIGKEITSFILTER**
FILTER FOR LIQUIDS
FILTRE A LIQUIDES

(30) Priorität: 28.12.1993 DE 9320038 U; 26.01.1994 DE 9401249 U
(43) Veröffentlichungstag der Anmeldung: 13.12.1995
(60) Teilanmeldung: 97106607.1
(73) Patentinhaber: MTS-PRODUKTE GmbH, 40885 Ratingen (DE)
(72) Erfinder: MATEA, Franz, 500 02 Hadec-Kralove (CZ)
(74) Vertreter: Vomberg, Friedhelm, Dipl.-Phys.
(86) Internationale Anmeldenummer: DE9401507
(87) Internationale Veröffentlichungsnummer: WO9517940

(56) Entgegenhaltungen:
- CH-A- 339 911
- DE-A- 1 708 587
- DE-A- 1 767 705

## Beschreibung

Die Erfindung betrifft einen Flüssigkeitsfilter nach dem Oberbegriff des Anspruches 1.

In das Schwimmbeckenwasser gelangen grobe Verunreinigungen, Trübstoffe, kolloide Stoffe sowie Mirkoorganismen. Durch Filtration, beispielsweise mit Sand, Anthrazit, Dolomit, Lavakies, Silikaten oder Aktivkohle können grobe Verunreinigungen und Trübstoffe zurückgehalten werden. Um die kolloiden sowie zum Teil auch echt gelösten Stoffe in eine filtrierfähige Form zu überführen, werden zum Teil Flockungsmittel eingesetzt, die ebenfalls in Filtern abgetrennt werden.

Um eine ausreichende Filtration zu gewährleisten, sind bestimmte Schichthöhen des Filtermaterials vorgeschrieben bzw. zweckentsprechend vorzusehen, z.B. bei Sand als Filtermaterial eine Schichthöhe von mehr als 1,2 m bei geschlossenen Filtergehäusen.

Die nach dem Stand der Technik bekannten Flüssigkeitsfilter bestehen aus zwei Halbschalen, die durch einen Spannring gehalten werden. Über einen Flüssigkeitseinlaß und einen Flüssigkeitsauslaß wird Wasser über ein Rohrsystem des Behälters gepumpt, der zur Filtration mit Kies oder Sand oder ähnlichen Filtermitteln gefüllt ist. Der gesamte Rohrinnenaufbau sowie die Halterungselemente für Siebe oder ähnliches sind sehr aufwendig.

Die CH-A-339 911 beschreibt einen Flüssigkeitsfilter von geschlossener Bauart mit körnigem Filtermaterial, dessen Filterbett mindestens annähernd zylindrisch geformt ist. In dem zylindrischen Filterbehälter ist ein Hohlraum zwischen der Filterbehälterinnenwand und einem gelochten, aus einem feinmaschigen Gewebe bestehenden Einsatz vorgesehen, der für die Zuführung des Rohwassers und bei einer radialen Filterwäsche für die Abführung des Schlammwassers dient. Für die Abführung des Schlammwassers ist ein koaxiales Standrohr vorgesehen. Das über eine Ringleitung und den genannten Hohlraum zugeführte Wasser dringt waagerecht durch die Öffnungen des Einsatzes in das zylindrische Filterbett auf dessen gesamter Länge ein und durchströmt dieses in radialer Richtung; die Abführung des Wassers erfolgt koaxial.

Die DE-A-17 67 705 beschreibt einen Flüssigkeitsfilter mit einem geschlossenen Behälter, der ein zentral angeordnetes Rohr aufweist, dessen Umfangswand ganz oder teilweise perforiert ist. Nahe bei dem unteren Umfang des Behälters ist auf dem ganzen oder einem Teil seines Umfanges und der Länge des Behälters eine am Behälterinnenmantel befestigte perforierte Siebplatte vorgesehen. Zwischen dem zentralen Rohr und der Siebplatte ist körniges Filtermaterial angeordnet. Das über das zentrale Rohr eingeleitete Rohwasser tritt in radialer Richtung aus dem zentralen Rohr aus und durchströmt die Filtermaterialschüttung radial, bevor die gereinigte Flüssigkeit über eine Austrittsöffnung abgeführt wird.

In einer alternativen Ausführungsform der DE-A-17 67 705 wird ein Filterbehälter beschrieben, der neben dem zentralen perforierten Rohr anstelle der Siebplatte eine große Anzahl dicht nebeneinanderstehender weiterer Rohre mit perforierter Wand besitzt, die koaxial angeordnet und jeweils mit einem Gewebe umhüllt sind, so daß sie als Filterelemente arbeiten.

Es ist Aufgabe der vorliegenden Erfindung, den Aufbau des eingangs genannten Flüssigkeitsfilters zu vereinfachen, ohne daß bei der Filtration Qualitätseinbußen hingenommen werden müssen. Die Vereinfachung des Aufbaues soll eine kostengünstigere Herstellung ermöglichen.

Diese Aufgabe wird durch den Flüssigkeitsfilter nach Anspruch 1 gelöst.

Dieser Flüssigkeitsfilter besitzt an der Behälterinnenwand einen mit dem Flüssigkeitseinlaß verbundenen ersten Kanal mit einer Auslaßöffnung im oberen Behälterbereich und einen zweiten Kanal mit einer im unteren Behälterbereich liegenden Einlaßöffnung als Verbindung zum Flüssigkeitsauslaß, wobei die Kanäle aus zwei an der Behälterinnenwand stehenden Wänden und einer die Kanäle abschließenden Abdeckung bestehen. Die Verbindung der genannten Kanäle mit der Behälterinnenwand kann sowohl materialsparend ausgeführt werden wie auch zusätzliche Halterungen oder Rohre entbehrlich machen, Ein Abknicken des Wasserzufuhrkanales bei unvorsichtigem Öffnen des Deckels ist ausgeschlossen, da mit dem Deckel der Kanal zur Wasserzufuhr mit entfernt wird. Die Herstellung läßt sich insbesondere bei einstückiger Bauweise erheblich verbilligen.

Weiterbildungen der Erfindung sind in den Ansprüchen 2 bis 10 beschrieben.

Im einfachsten Fall bestehen die Kanäle aus zwei parallel zueinander und senkrecht zur Behälterinnenwand stehenden Wänden und einer im wesentlichen zur Behälterinnenwand parallelen Abdeckung.

So kann die genannte Abdeckung der parallel zueinander und senkrecht zur Behälterinnenwand stehenden Kanalwände lösbar mit den parallelen Wänden der Kanäle verbunden sein. Die Abdeckung, etwa in Form einer Leiste, kann auf die parallelen Seitenwände aufgeklemmt, angeschraubt oder mit den nach dem Stand der Technik üblichen Verbindungsmitteln angebracht sein.

Nach einer weiteren Ausgestaltung der Erfindung kann der Behälter aus einem über einen Spannring lösbar miteinander verbundenen Ober- und Unterteil bestehen, von denen mindestens eines ein Kunststoffspritzgußteil ist, das vorzugsweise einstückig mit den Kanalwänden hergestellt worden ist. Die Abdeckung, etwa in Form einer Leiste, kann auf die parallelen Seitenwände aufgeklemmt, angeschraubt oder mit den nach dem Stand der Technik üblichen Verbindungsmitteln angebracht sein.

Bevorzugt sind der Flüssigkeitseinlaß und der Flüssigkeitsauslaß im Unterteil des Behälters angeordnet, wobei die Stirnfläche des nach oben führenden, mit dem Flüssigkeitseinlaß verbundenen ersten Kanals des Unterteils an der Stirnfläche des Kanals des Oberteils anliegt. Gegebenenfalls können betreffende Kanalabschnitte ineinandergreifen, falls eine Verbesserung der Abdichtung nach außen bzw. zum Behälterinnenraum gewünscht wird.

Nach einer weiteren Ausgestaltung der Erfindung ist der erste Kanal im Oberteil an seinem Flüssigkeitsauslaßende mit einer Abdeckung versehen, die Bohrungen, Schlitze oder sonstige Durchbrechungen aufweist. Die Abdeckung ist ein ringförmiger Flüssigkeitsverteiler, der die Flüssigkeit auf die Sand- und/oder Kiesschüttung ablaufen läßt. Im unteren Bereich liegt eine fein geschlitzte Abdeckung auf der Einlaßöffnung, die verhindern soll, daß Filtermaterial über den Abfluß ausgetragen wird. Die Abdeckung des ersten und/oder des zweiten Kanals können mittels eines Klemm-, Rast- oder Schraubverschlusses befestigt sein, so daß sie zu Wartungsarbeiten oder etwaigem Austausch zugänglich sind.

Um die Bauhöhe des Flüssigkeitsfilters zu minimieren, sind im Behälterinnenraum mehrere miteinander verbundene Kammern zur Flüssigkeitsdurchführung vorgesehen, von denen zumindest zwei Kammern eine Filtermaterialschüttung oder sonstige Filter enthalten, wobei die Gesamthöhe aus den einzelnen Filtermaterialschüttungen insgesamt eine der gewünschten Schichthöhe entsprechende Schüttung ergibt. In Abkehr von den nach dem Stand der Technik bekannten Konstruktionsprinzipien wird die Schichthöhe durch eine Flüssigkeitsführung erreicht, die zwischen dem Wassereinlaß und dem Wasserauslaß auch Umlenkungen besitzt. Diese Flüssigkeitsumlenkungen können 180°-Umlenkungen sein, so daß in nebeneinanderliegenden Kammern die Flüssigkeit in entgegengesetzten Richtungen geführt wird, sie können aber auch in einer wendelförmigen oder spiralförmigen Flüssigkeitsführung bestehen.

Allein durch Verwendung zwei nebeneinanderliegender Kammern, die durch eine 180°-Flüssigkeitsumlenkung miteinander verbunden sind, läßt sich die Bauhöhe halbieren. Vorzugsweise sind mindestens zwei nebeneinanderliegende Kammern vorgesehen, die mit entgegengesetzt gerichteten Strömungen durchfließbar sind. Bei n nebeneinanderliegenden Kammern wird die Bauhöhe auf 1/n verkürzt.

Zur Verbindung zweier Kammern werden vorzugsweise im jeweiligen Kammerboden oder in dessen Nähe Durchführungen zur benachbarten Kammer verwendet, um die jeweils platzsparendste Bauweise zu erhalten. Vorzugsweise sind die Kammern im wesentlichen vertikal nebeneinanderliegend angeordnet, wobei nach einer weiteren Ausgestaltung der Erfindung mindestens eine der Kammern konzentrisch zu einer weiteren Kammer angeordnet und als Ringkammer ausgebildet ist. Beispielsweise können auf diese Bauweise eine zentrische, zylinderförmige Kammer mit mehreren, sie in unterschiedlichen Radialabständen umgebenden weiteren Ringkammern vorgesehen sein. Diese Kammern sind durch jeweilige Seitenwand- und/oder Bodendurchbrechungen, 180°-Rohrkrümmer und/oder Überläufe miteinander verbunden, insbesondere dergestalt, daß zwei benachbarte Kammern eine gemeinsame zylinderförmige Wandung besitzen. Diese Bauweise ist nicht nur platz- sondern auch materialsparend. Vorzugsweise ist die mit dem Wasserauslaß unmittelbar verbundene Kammer ein zentrisch angeordnetes Steigrohr. In diesem Falle wird die durch den Wassereinlaß eingeführte Flüssigkeit in den oberen Bereich einer der äußeren Ringkammern eingeführt, wo sie nach unten sinkt, nach dem Prinzip der kommunizierenden Röhren im Steigrohr entsprechend ansteigt und über einen tiefer als den Wassereinlaß liegenden Wasserauslaß abgeführt wird.

Um eine Abfuhr des Filtermaterials zu verhindern, ist zwischen dem in der Filterschüttung gefüllten Teil des Steigrohres und dem Wasserauslaß ein Gewebefilter angeordnet. Vorzugsweise besteht dieser Gewebefilter aus einem zu einem geschlossenen Ring zusammengesetzten Filtergewebe, das zwischen einem geschlossenen Deckel und einem Boden mit einer Öffnung (zum Steigrohr) eingespannt ist. Nach einer weiteren Ausführungsform der Erfindung ist das Filterband wellen- oder zick-zack-förmig verlaufend zwischen dem Deckel und dem Boden eingespannt, so daß sich eine vergrößerte Durchlaßfläche für das Wasser ergibt. Ein solcher Gewebefilter ist beispielsweise in der EP 0 071 200 B1 beschrieben.

Nach einer Weiterbildung der Erfindung führt ein an einem Wassereinlaßstutzen angeschlossenes Rohr zu einem im oberen Behälterraum angeordneten Verteiler, durch den die Flüssigkeit in eine äußere Ringkammer verteilt wird. Inmitten dieser Ringkammer ist das mit der äußeren Ringkammer verbundene Steigrohr angeordnet, an dessen oberen Ende ein Auslaßrohr als Verbindung zum Auslaßstutzen angeordnet ist.

Nach einer weiteren Ausgestaltung der Erfindung ist der Behälter zweiteilig ausgebildet, wobei die Behälterteile lösbar miteinander verbunden sind. Hierdurch ist bei einem Wechsel des Filtermaterials oder für sonstige Arbeiten das Behälterinnere leicht zugänglich. Vorzugsweise ist einer der Behälterteile ein abnehmbarer Deckel.

Ausführungsbeispiele der Erfindung sind in den Zeichnungen dargestellt. Es zeigen:

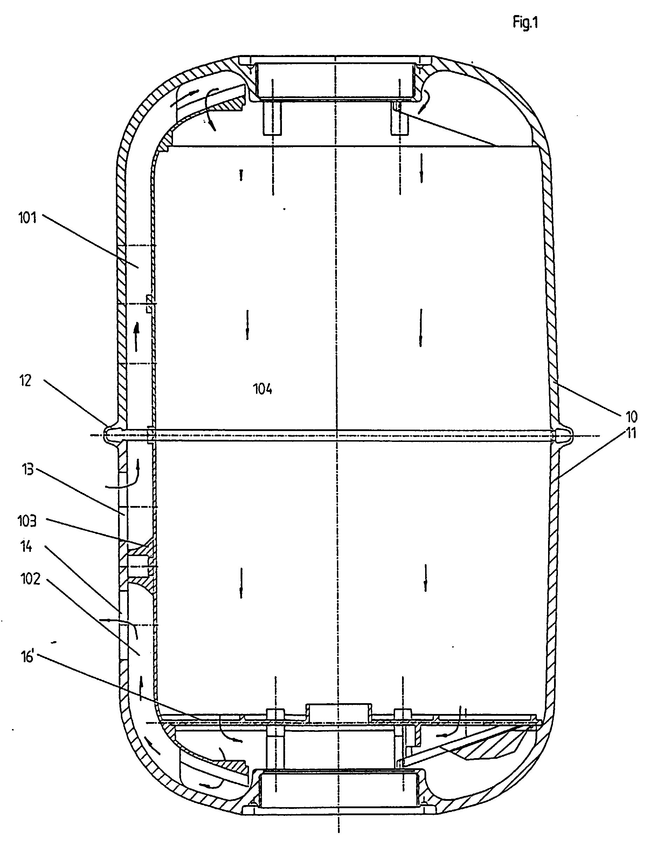

- Fig. 1 bis 3: jeweils verschiedene Ausführungsformen der erfindungsgemäßen Flüssigkeitsfilter.

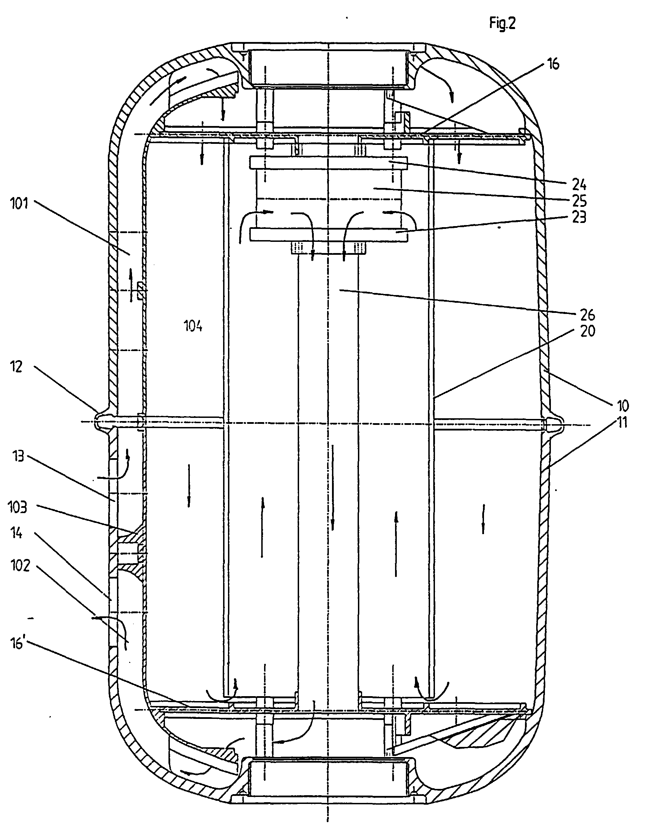

Der in Fig. 1 dargestellte Flüssigkeitsfilter besteht aus jeweils spritzgegossenen Teilen, nämlich einem Oberteil 10 und einem Unterteil 11, die über einen Spannring 12 zusammengehalten werden. Das Unterteil 11 weist einen Einlaß 13 sowie einen Auslaß 14 auf, die über eine Wanddurchbrechung zu jeweiligen Kanälen 101 und 102 führen, die im einfachsten Fall aus zwei zueinander parallelen, senkrecht auf der Behälterinnenwand stehenden Seitenwänden und einer parallel zur Behälterinnenwand liegenden Abdeckung bestehen, die aufgeklemmt oder aufgeschraubt ist. Der mit dem Flüssigkeitseinlaß 13 verbundene Kanal 101 besitzt einen unteren Abschluß 103, so daß eingepumptes Wasser in dem Kanal nach oben strömt. Der Kanal 101 endet im oberen Behälterbereich und ist mit einer Abdeckung als Verteiler 16 verbunden (siehe Fig. 2). Diese Abdeckung kann Schlitze, Durchbrechungen oder ähnliche wasserdurchlässige Geometrien aufweisen. Unterhalb des Verteilers 16 ist im Behälterinnenraum 104 eine Kies- und/oder Sandschüttung aufgebaut, die als Filtermaterial dient. Auch im unteren Bereich wird der Kanal 102 durch eine mit Schlitzen, Bohrungen oder anderen Öffnungen versehenen Abdeckung gegen den Durchtritt von Filtermaterial in den Kanal 102 abgeschirmt. Der Kanal 102, der wie der Kanal 101 aufgebaut ist, wird nach oben hin durch eine Trennung 103 begrenzt. Der Flüssigkeitsverlauf ist anhand von Pfeilen schematisch dargestellt.

Eine weitere Ausführungsform ist in Fig. 2 dargestellt, die ebenfalls aus einem Deckel 10 sowie einem Bodenteil 11 besteht, die einen kreisförmigen Querschnitt haben und lösbar aufeinandergesetzt sind, wobei an der Aufsetzstelle jeweils äußere Ringwülste mit einem Spannring 12 fixiert werden.

Der Unterschied des in Fig. 2 dargestellten Flüssigkeitsfilters zu dem vorbeschriebenen besteht darin, daß im Zentrum ein Steigrohr 20 vorgesehen ist, um das herum im Ringraum eine Sand- oder sonstige Filterschüttung angeordnet ist. Über die mit Durchströmöffnungen versehene Abdeckung 16 gelangt die zu filtrierende Flüssigkeit in einen weiteren Ringraum 104, der beispielsweise mit Aktivkohle oder sonstigen Filterkartuschen gefüllt sein kann. Im oberen Bereich des Steigrohres 20 ist ein Gewebefilter, bestehend aus einem mit einer Durchbrechung versehenen Boden 23 und einem Deckel 24 sowie zwischen Boden und Deckel eingespanntem Filtergewebe 25 angeordnet. Das Wasser kann über dieses Filtergewebe in den hierdurch gebildeten Zylinderinnenraum einströmen und in einem zentrisch angeordneten Rohr 26 nach unten abfließen, um von dort in den Ringkanal 102 zum Flüssigkeitsauslaßstutzen 14 zu gelangen. Der Vorteil dieser Anordnung liegt darin, daß durch die Umlenkung bzw. Führung des Wassers in einem Steigrohr die Filterbehälterbauhöhe um die Hälfte minimiert wird.

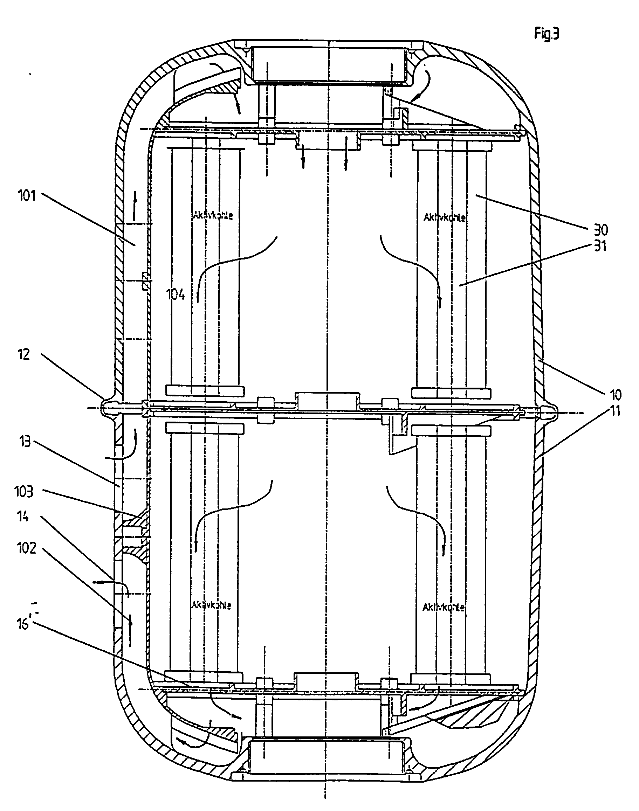

Der in Fig. 3 dargestellte Flüssigkeitsfilter entspricht im äußeren Aufbau dem beispielsweise in Fig. 1 dargestellten und zuvor beschriebenen Flüssigkeitsfilter. Jedoch befinden sich in dem Behälterinnenraum 104 gegebenenfalls zusätzlich zu einer Kiesschüttung Aktivkohlekartuschen 30 mit einem innen angeordneten Fallrohr 31, worüber dort abströmende Flüssigkeit in den Ablaufkanal 102 gelangt.

## Patentansprüche

1. Flüssigkeitsfilter, insbesondere Wasserfilter für Schwimmbäder, bestehend aus einem geschlossenen Behälter mit einem Flüssigkeitseinlaß (13) und einem Flüssigkeitsauslaß (14), zwischen denen mindestens ein Filterkörper oder mindestens eine Filtermaterialschüttung angeordnet ist, wobei an der Behälterinnenwand ein mit dem Flüssigkeitseinlaß verbundener Kanal (101) mit einer Auslaßöffnung im oberen Behälterbereich und ein zweiter Kanal (102) mit einer im unteren Behälterbereich liegenden Einlaßöffnung als Verbindung zum Flüssigkeitsauslaß angeordnet sind,
**dadurch gekennzeichnet,**
daß die Kanäle (101, 102) aus zwei an der Behälterinnenwand stehenden Wänden und einer die Kanäle abschließenden Abdeckung bestehen.

2. Flüssigkeitsfilter nach Anspruch 1, dadurch gekennzeichnet, daß die Kanäle (101, 102) aus zwei parallel zueinander und senkrecht zur Behälterinnenwand stehenden Wänden und einer im wesentlichen zur Behälterinnenwand parallelen Abdeckung bestehen, die lösbar mit den parallelen Wänden der Kanäle (101, 102) verbunden ist.

3. Flüssigkeitsfilter nach einem der Ansprüche 1 oder 2, dadurch gekennzeichnet, daß der Behälter aus über einen Spannring (12) lösbar miteinander verbundenen Ober- (10) und Unterteil (11) besteht, von denen mindestens eines ein Kunststoffspritzgußteil ist, das vorzugsweise einstückig mit den Kanalwänden hergestellt worden ist.

4. Flüssigkeitsfilter nach einem der Ansprüche 1, 2 oder 3, dadurch gekennzeichnet, daß der erste Kanal (101) im Oberteil (10) an seinem Flüssigkeitsauslaßende eine mit Bohrungen, Schlitzen und/oder sonstigen Durchbrechungen versehene Abdeckung (16) aufweist oder daß im unteren Bereich eine feingeschlitzte, mit oder ohne Bohrungen versehene Abdeckung (16') auf der Einlaßöffnungg des zweiten Kanals (102) liegt.

5. Flüssigkeitsfilter nach einem der Ansprüche 1 bis 3, dadurch gekennzeichnet, daß im Behälterinnenraum mehrere miteinander verbundene Kammern zur Flüssigkeitsdurchführung vorgesehen sind, von denen zumindest zwei Kammern eine Filtermaterialschüttung oder sonstige Filter enthalten, wobei die Gesamthöhe aus den einzelnen Filtermaterialschüttungen oder sonstigen Filtern insgesamt eine der gewünschten Schichthöhe entsprechende Schüttung ergibt.

6. Flüssigkeitsfilter nach Anspruch 5, dadurch gekennzeichnet, daß die Kammern im wesentlichen vertikal nebeneinanderliegend angeordnet sind.

7. Flüssigkeitsfilter nach Anspruch 5 oder 6, dadurch gekennzeichnet, daß mindestens eine der Kammern konzentrisch zu einer weiteren Kammer angeordnet und als Ringkammer (106) ausgebildet ist.

8. Flüssigkeitsfilter nach einem der Ansprüche 6 oder 7, dadurch gekennzeichnet, daß die mit dem Flüssigkeitsauslaß (14) verbundene Kammer ein zentrisch angeordnetes mit einer Filterschüttung oder Aktivkohle gefülltes Steigrohr (20) ist.

9. Flüssigkeitsfilter nach einem der Ansprüche 6 bis 8, dadurch gekennzeichnet, daß ein an einem Wassereinlaßstutzen (13) angeschlossener Kanal (101) zu einem im oberen Behälterraum angeordneten Verteiler (16) führt, durch den die Flüssigkeit in eine äußere Ringkammer (106) verteilt wird, zentrisch in dem Behälter ein Steigrohr (20) angeordnet ist, an dessen oberen Ende ein Filter und unterhalb der Bodenöffnung des Filters ein Fallrohr als Verbindung zum Kanal (102) und zum Auslaßstutzen (14) angeordnet sind.

10. Flüssigkeitsfilter nach einem der Ansprüche 1 bis 9, dadurch gekennzeichnet, daß der Behälterinnenraum mindestens einen auswechselbaren Kartuschenfilter enthält, in den oder in die radial das Wasser einströmt und über ein permforiertes Innenrohr dem Flüssigkeitsauslaß zuführbar ist.

## Claims

1. Filter for liquids, in particular filter for swimming-pool water, said filter consisting of a closed receptacle with a liquid inlet (13) and a liquid outlet (14) between which at least one filter element or at least one bed of filter material is located, whereby a channel (101) connected with the liquid inlet and having a liquid outlet in the upper region of the receptacle and a second channel (102) with an inlet opening as a connection to the liquid outlet in the lower region of the housing are located of the receptacle,
**characterised in that**
the channels (101, 102) consist of two walls at the inside wall of the receptacle and a sealing closing the channels.

2. Filter for liquids according to claim 1, characterised in that the channels (101, 102) consist of two walls arranged parallel to each other and perpendicular to the inside wall of the receptacle and of a sealing being arranged essentially parallel to the inside wall of the receptacle, said sealing connected disengageable to the parallel walls of the channels (101, 102).

3. Filter for liquids according to one of the claims 1 or 2, characterised in that the receptacle consists of an upper part and a lower part which are connected together detachably by an adapter ring, at least one of said receptacle parts being an injection moulding plastic part, which preferably is produced as a one-part piece including the channel walls.

4. Filter for liquids according to one of the claims 1, 2 or 3, characterised in that the first channel (101) in the upper part (10) has a sealing (16) provided with borings, slits and/or other apertures or that a fine slitted sealing (16) provided with or without borings is located in the lower region and placed on top of the inlet opening of the second channel (102).

5. Filter for liquids according to one of the claims 1 to 3, characterised in that several chambers connected with each other are provided for the liquid guiding, at least two of the channels having a bed of filter material or other filter elements, whereby the total height of the single beds of filter material or the other filter elements corresponds with the desired height of filtering materials.

6. Filter for liquids according to claim 5, characterised in that the chambers are arranged essentially vertical side by side.

7. Filter for liquids according to claims 5 or 6, characterised in that at least one of the chambers is arranged concentrically to another chamber and formed as a ring chamber (106).

8. Filter for liquids according to one of the claims 6 or 7, characterised in that the chamber connected to the liquid outlet (14) is an overflow pipe arranged centrally and filled up with a bed of filter material or activated carbon.

9. Filter for liquids according to one of the claims 6 to 8, characterised in that a channel (101) connected to the water inlet socket (13) leads to a distributor arranged in the upper region of the receptacle and distributing the liquid into an outer ring chamber (106), that an overflow pipe (20) is arranged centrally in the receptacle, the overflow pipe having at the upper end a filter element and below the bottom aperture of the filter a down pipe as connection to channel (102) and to the outlet socket (14).

10. Filter for liquids according to one of the claims 1 to 9, characterised in that the interior of the receptacle contains at least one renewable cartridge filter into which the water flows, optionally radially, and can be guided via a perforated interior pipe to the liquid outlet.

## Revendications

1. Filtre de liquide, en particulier filtre d'eau pour des piscines, se composant d'un réservoir fermé avec une entrée de liquide (13) et une sortie de liquide (14), entre lesquelles est disposé du moins un corps filtrant ou du moins un lit de matière filtrante, à la paroi intérieure du réservoir étant disposés un canal (101) connecté à l'entrée de liquide et ayant une ouverture d'évacuation dans la zone supérieure du réservoir ainsi qu'un deuxième canal (102) ayant une ouverture d'admission située dans la zone inférieure du réservoir, qui sert de connexion vers la sotte de liquide,
**caractérisé par le fait**
que les canaux (101, 102) se composent de deux parois situées à la paroi intérieure du réservoir et d'une couverture fermant les canaux.

2. Filtre de liquide selon la revendication 1, caractérisé par le fait que les canaux (101, 102) se composent de deux parois disposées parallèlement entre elles et verticalement à la paroi intérieure du réservoir et d'une couverture située pour l'essentiel parallèlement a la paroi intérieure du réservoir, ladite couverture étant reliée de manière amovible aux parois parallèles des canaux (101, 102).

3. Filtre de liquide selon l'une des revendications 1 ou 2, caractérisé par le fait que le réservoir se compose d'une partie supérieure (10) et d'une partie inférieure (11) qui sont reliées entre elles de manière amovible par le biais d'un anneau de serrage (12), dont l'une du moins est une pièce en matière plastique moulée par injection qui, de préférence, était fabriquée en une seule pièce avec les parois des canaux.

4. Filtre de liquide selon l'une des revendications 1, 2 ou 3, caractérisé par le fait que le premier canal (101) dans la partie supérieure (10) présente à son extrémité d'évacuation de liquide une couverture (16) munie de trous, de fentes et/ou d'autres ouvertures, ou qu'une couverture finement fendue (16') munie ou dépourvue de trous est située dans la zone inférieure sur l'ouverture d'admission du deuxième canal (102).

5. Filtre de liquide selon l'une des revendications 1 à 3, caractérisé par le fait que plusieurs chambres reliées entre elles et destinées au passage du liquide sont prévues à l'intérieur du réservoir, dont deux chambres au moins contiennent un lit de matière filtrante ou d'autres filtres, la hauteur totale des lits individuels de matière filtrante ou des autres filtres correspondant au total à la hauteur désirée d'empilage.

6. Filtre de liquide selon la revendication 5, caractérisé par le fait que les chambres sont disposées pour l'essentiel verticalement l'une à côté de l'autre.

7. Filtre de liquide selon la revendication 5 ou 6, caractérisé par le fait que l'une du moins des chambres est disposée de façon concentrique à une autre chambre et est réalisée en tant que chambre annulaire (106).

8. Filtre de liquide selon l'une des revendications 6 ou 7, caractérisé par le fait que la chambre qui est reliée à la sortie de liquide (14) est un tuyau de montée (20) disposé de manière centrale et rempli d'un lit de matière filtrante ou de charbon actif.

9. Filtre de liquide selon l'une des revendications 6 à 8, caractérisé par le fait qu'un canal (101) connecté à une tubulure d'admission d'eau (13) conduit vers un distributeur (16) qui est disposé dans la zone supérieure du réservoir et par l'intermédiaire duquel le liquide est distribué dans une chambre annulaire extérieure (106), qu'un tuyau de montée (20) est disposé de façon centrale dans le réservoir, à l'extrémité supérieure duquel est disposé un filtre et au-dessous de l'ouverture de fond du filtre est disposé un tuyau de descente en tant que connexion vers le canal (102) et la tubulure d'évacuation (14).

10. Filtre de liquide selon l'une des revendications 1 à 9, caractérisé par le fait que l'intérieur du réservoir contient du moins une cartouche filtrante échangeable, dans laquelle ou bien dans lesquelles l'eau coule de manière radiale et peut être amené par un tuyau intérieur perforé à la sortie de liquide.
